# EUROPÄISCHE PATENTANMELDUNG

(11) **EP 4 751 929 A1**
(43) Veröffentlichungstag der Anmeldung: **03.06.2026**
(21) Anmeldenummer: 24216610.6
(22) Anmeldetag: 29.11.2024
(51) Int. Cl.: B60C 1/00, C08L 7/00, C08K 5/098, C08K 3/04, C08K 3/06

(54) **ZINKVERBINDUNGEN FÜR DEN EINSATZ IN KAUTSCHUKZUSAMMENSETZUNGEN**

(71) Anmelder: Schill + Seilacher "Struktol" GmbH, 22113 Hamburg (DE)
(72) Erfinder: Niefind, Felix, 21031 Hamburg (DE); Beermann, Tim, 22926 Ahrensburg (DE); Geidel, Christian, 22303 Hamburg (DE)
(74) Vertreter: Eisenführ Speiser

(57) **Zusammenfassung**

Die vorliegende Erfindung betrifft Kautschukzusammensetzungen, welche Zinkverbindung von mindestens einer verzweigten, aliphatischen C₅- bis C₃₀-Carbonsäure umfasst, wobei das Molverhältnis der Carbonsäure zu Zink in der Zinkverbindung 0,7 zu 1 bis 1 zu 0,7 beträgt, sowie Verfahren zur Herstellung der Zinkverbindung und dessen Verwendung. Weiterhin betrifft die vorliegende Erfindung Gummiartikel, bei denen wenigstens ein Bauteil zumindest teilweise aus der erfindungsgemäßen Kautschukzusammensetzung hergestellt wurde.

## Beschreibung

### Gebiet der Erfindung

Die vorliegende Erfindung betrifft Kautschukzusammensetzungen, welche Zinkverbindungen von mindestens einer verzweigten, aliphatischen C₅- bis C₃₀-Carbonsäure umfassen, wobei das Molverhältnis der Carbonsäure zu Zink in der Zinkverbindung 0,7 zu 1 bis 1 zu 0,7 beträgt, sowie Verfahren zur Herstellung der Zinkverbindungen und deren Verwendung. Weiterhin betrifft die vorliegende Erfindung Gummiartikel, bei denen wenigstens ein Bauteil zumindest teilweise aus der erfindungsgemäßen Kautschukzusammensetzung hergestellt wurde.

### Hintergrund der Erfindung

Es ist bekannt, dass manche Kautschukzusammensetzungen eine mangelhafte Reversionsstabilität aufweisen. Unter Reversion versteht man ein Wiederabfallen des Vernetzungsgrades und der mechanischen Werte von Vulkanisaten (wie Zugfestigkeit, Weiterreißfestigkeit, Elastizität) bei einer Fortführung der Vulkanisation über das Optimum hinaus. Reversion tritt bei der Vulkanisation von Dien-Kautschuken, insbesondere Naturkautschuk und synthetischem Polyisopren, bei hohen Vulkanisationstemperaturen bzw. langen. Vulkanisationszeiten auf. Nach Erreichen eines gewissen "state-of-cure" wird eine der Vernetzung entgegengesetzte Reaktion in Gang gesetzt, die Reversion, bei welcher einige Schwefelbrücken wieder zerstört werden. Da Naturkautschuk in nahezu allen Bereichen der Gummi-Industrie (in Reifen, Dichtungen, Schläuchen, Stoßdämpfern, Förderbänder, Schuhsohlen, um nur einige zu nennen), Anwendung findet (Anteil von ca. 40-45%), ist die Vermeidung der Reversion ein relevantes Problem in der Gummi-Industrie.

Es ist bekannt, dass lösliche Zinkverbindungen auf Basis von verzweigten oder ungesättigten Carbonsäuren das Vernetzungsverhalten von Kautschukmischungen dahingehend positiv beeinflussen können, dass sie die Reversionsstabilität verbessern. Hierzu werden bislang u.a. Zink-Ethylhexanoat (2:1 und 4:6 Komplexe) und Zink-Neodecanoat (2:1 Komplex) verwendet (Industrieller Standard unter anderem STRUKTOL ZEH, STRUKTOL Aktivator 50, WO2023/037239 A1).

Das bekannte Zink-Ethylhexanoat ist jedoch flüssig, wodurch es nicht in allen Produktionsstätten ohne weitere technische Dosiereinheit eingesetzt werden kann. Daher wird Zink-Ethylhexanoat oftmals als sogenanntes "Dry-Liquid" eingesetzt. Die Weiterverarbeitung der Zinkverbindung zu einem dem Fachmann bekannten Dry-Liquid erfolgt durch Aufbringen auf poröse Materialien, wie z.B. Siliziumdioxid (Kieselsäure), Kreide, Schichtsilikate oder Metallorganische Gerüstverbindungen (MOFs) entsprechend gängiger Verfahren. Durch die Verwendung von Trägermaterialien wird die End-Konzentration an Zink in dem eingesetzten Material jedoch verringert.

Die Aufgabe der vorliegenden Erfindung besteht in der Entwicklung eines Kautschukadditivs, welches die finalen physikalischen Eigenschaften sowie die Verarbeitbarkeit der Kautschukzusammensetzung positiv beeinflusst und insbesondere die Reversionsstabilität von Kautschukzusammensetzungen erhöht, ohne die Toxizität zu verschlechtern. Die Mooney-Messung liefert hier einen Hinweis darauf, wie gut das Material verarbeitet werden kann.

Gleichzeitig sollte das eingesetzte Kautschukadditiv eine feste Form aufweisen, um eine einfache Dosierung und gute Verarbeitbarkeit zu gewährleisten. Hierdurch kann der Einsatz von Trägermaterialien vermieden werden, was vorteilhaft auf Grund von reduzierter Staubentwicklung und damit besserem Arbeitsschutz ist.

Weiterhin sollten die Flexometer-Eigenschaften, wie der Heat-Build-Up (HBU) von Kautschukzusammensetzungen durch das Kautschukadditiv verbessert werden. Die Flexometer-Prüfung ist vor allem für Kautschukzusammensetzungen, die für die Herstellung von Reifen eingesetzt werden, wichtig. Die Dissipation von Energie wird bei der Beanspruchung des Reifens beim Fahren bzw. Rollen über die Straße zum wichtigen Faktor; der Kautschuk darf nicht unter zu starker Erwärmung degradieren, da sonst die Fahrsicherheit kompromittiert würde.

### Zusammenfassung der Erfindung

Gelöst wird die Aufgabe erfindungsgemäß durch eine Kautschukzusammensetzung, die eine Zinkverbindung enthält, welche aus mindestens einer verzweigten, aliphatischen C₅- bis C₃₀-Carbonsäure und mindestens einer Zinkquelle hergestellt ist, wobei das Molverhältnis von Carbonsäure zu Zink in der Zinkverbindung 0,7 : 1 bis 1 : 0,7 beträgt. Es wurde überraschenderweise gefunden, dass die erfindungsgemäße Kautschukzusammensetzung eine verbesserte Reversionsstabilität sowie verbesserte dynamisch mechanische Eigenschaften aufweist.

Neben der Reversion konnte der state-of-cure und der Heat-Build-Up (HBU) mit Hilfe der erfindungsgemäßen Zinkverbindung verbessert werden. Mit dem Begriff "state-of-cure" wird die Menge an Netzknoten in einem Stück Gummi (Elastomer) bezeichnet, die während der Vernetzungsreaktion, der Vulkanisation, entstehen. Die Reversion ist der Vorgang des Abbaus dieser Netzknoten, der nach Erreichen des maximalen state-of-cure startet und diesen wieder absenkt. Der state-of-cure ist verknüpft mit allen finalen physikalischen Eigenschaften der Kautschukzusammensetzung wie Zugfestigkeiten, Reißwiderstand, welche für Reifen genauso relevant sind wie für Schläuche, Förderbänder und Schuhsohlen. Bei Verwendung der erfindungsgemäßen Zinkverbindung wird sowohl der maximale state-of-cure erhöht als auch die Geschwindigkeit bzw. Ausprägung der Reversion verringert.

Flexometer-Eigenschaften, wie der Heat-Build-Up (HBU), konnten ebenfalls positiv beeinflusst werden. Der HBU ist eine Prüfung, bei der bewertet wird, wie viel Energie im Inneren eines Elastomer-Prüfkörpers bei externer, dynamischer, mechanischer Belastung dissipiert wird. Je mehr Energie dissipiert wird, abhängig von der Ausprägung des Verlustmoduls G", desto schneller erhitzt sich der Prüfkörper und desto schneller kommt es zu Degradation und dem sog. "Blow-out" bzw. der Zerstörung des Prüfkörpers.

Durch den Einsatz einer Zinkverbindung, welche ein Molverhältnis von Carbonsäure zu Zink von 0,7 zu 1 bis 1 zu 0,7 aufweist, konnten die oben beschriebenen physikalischen Mischungseigenschaften von Kautschukzusammensetzungen gegenüber ansonsten identischen Kautschukzusammensetzungen, die eine bekannte Zinkverbindungen enthalten, verbessert werden. Die aus dem Stand der Technik bekannten Zinkverbindungen weisen hierbei andere Molverhältnisse von Carbonsäure zu Zink auf (z.B. 1:2-Komplex und 4:6-Komplex). (Industrielle Standards sind unter anderem STRUKTOL ZEH, STRUKTOL Aktivator 50, WO2023/037239 A1).

Ein weiterer Aspekt der vorliegenden Erfindung betrifft einen Gummiartikel, bei dem wenigstens ein Bauteil zumindest teilweise aus der erfindungsgemäßen Kautschukzusammensetzung hergestellt wurde.

Ein weiterer Aspekt der vorliegenden Erfindung betrifft die Verwendung der erfindungsgemä-βen Zinkverbindung als Verarbeitungshilfe in Dien-Kautschuk(en), wobei der oder die Dien-Kautschuke) ausgewählt ist/sind aus Butadien-Kautschuk, Polyisopren, Styrol-Butadien-Kautschuk, Naturkautschuk, Acrylnitril-Butadien-Kautschuk, Ethylen-Propylen-Dien-Kautschuk, Fluorkautschuk und thermoplastisches Elastomer, vorzugsweise Naturkautschuk.

Ein weiterer Aspekt der vorliegenden Erfindung betrifft die Verwendung der erfindungsgemä-βen Zinkverbindung zur Erhöhung der Reversionsstabilität von Kautschukzusammensetzungen.

Ein weiterer Aspekt der vorliegenden Erfindung betrifft ein Verfahren zur Herstellung einer Zinkverbindung, bei welchem Verfahren:
i) mindestens eine verzweigte, aliphatische C₅- bis C₃₀-Carbonsäure und mindestens eine Zinkquelle ausgewählt aus Zinkhydroxid, Zinkoxid, Zinkchlorid, Zinknitrat, oder Mischungen davon, vorzugsweise Zinkoxid, vermischt werden,
ii) das in i) hergestellte Gemisch bei einem Druck von 1 bis 3 atm auf Temperaturen von 25 bis 250°C, vorzugsweise 80 bis 180°C und insbesondere 100 bis 150°C erhitzt wird, um Zinkverbindung mit einem Molverhältnis von Carbonsäure zu Zink von 0,7 zu 1 bis 1 zu 0,7 Mol zu erhalten, und
iii) gegebenenfalls die in ii) erhaltene Zinkverbindung in die Form von einer oder mehrere Pastillen gebracht wird.

Bevorzugte Ausführungsformen sind Gegenstand der Unteransprüche. Ausführungsformen der Erfindungen umfassen die im Folgenden aufgeführten Bestandteile und können insbesondere aus diesen bestehen.

### Abbildungen

- Abbildung 1:: TGA-Messungen (gemessen gemäß DIN 51006) von verschiedenen Zinkverbindungen (Zinkverbindung A, Zinkverbindung B, Vergleichszinkverbindung 1:2 und Vergleichszinkverbindung 4:6).
- Abbildung 2:: DSC-Messungen (gemessen gemäß DIN51007) von verschiedenen Zinkverbindungen (Zinkverbindung A, Zinkverbindung B, Vergleichszinkverbindung 1:2 und Vergleichszinkverbindung 4:6).
- Abbildung 3:: Vergleich der IR-Spektren von Zinkoxid (ZnO), Isononansäure und Zinkverbindung B. Die IR-Spektren sind vektornormiert.
- Abbildung 4:: Vergleich der IR-Spektren von Zinkoxid (ZnO), Isononansäure und Zinkverbindung A. Die IR-Spektren sind vektornormiert.
- Abbildung 5:: Vergleich der IR-Spektren von Vergleichszinkverbindung 1:2 (Stöchiometrie: 1 mol Zinkoxid zu 2 mol Isononansäure) und Zinkverbindung B. Die IR-Spektren sind vektornormiert.
- Abbildung 6:: Vergleich der IR-Spektren von Vergleichszinkverbindung 1:2 (Stöchiometrie: 1 mol Zinkoxid zu 2 mol Isononansäure) und Zinkverbindung A. Die IR-Spektren sind vektornormiert.
- Abbildung 7:: Vergleich der IR-Spektren von Vergleichszinkverbindung 4:6 (Stöchiometrie: 4 mol Zinkoxid zu 6 mol Isononansäure) und Zinkverbindung B. Die IR-Spektren sind vektornormiert.
- Abbildung 8:: Vergleich der IR-Spektren von Vergleichszinkverbindung 4:6 (Stöchiometrie: 4 mol Zinkoxid zu 6 mol Isononansäure) und Zinkverbindung A. Die IR-Spektren sind vektornormiert.
- Abbildung 9:: Graphische Darstellung des Vernetzungsverhaltens der Kautschukzusammensetzungen aus Beispiel 2a) (gestrichelt 1.1, durchgezogen 1.2, gepunktet Referenz ohne Additiv), gemessen mittels Vulkameter MDR 2000.
- Abbildung 10:: Graphische Darstellung des Vernetzungsverhaltens der Kautschukzusammensetzungen aus Beispiel 2b) (durchgezogen 2.3, gepunktet 2.2, gestrichelt 2.1) gemessen mittels Vulkameter MDR 2000.

### Ausführliche Beschreibung der Erfindung

Die Erfinder haben überraschenderweise festgestellt, dass Zinkverbindungen, hergestellt aus mindestens einer verzweigten, aliphatischen C₅- bis C₃₀-Carbonsäure und mindestens einer Zinkquelle, welche ein Molverhältnis der Carbonsäure zu Zink von 0,7 zu 1 bis 1 zu 0,7 aufweisen, positive Eigenschaften als Kautschukadditiv in Kautschukzusammensetzungen aufweisen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

### Zinkverbindung

Die erfindungsgemäße Kautschukzusammensetzung umfasst Zinkverbindung von mindestens einer verzweigten, aliphatischen C₅- bis C₃₀-Carbonsäure, wobei das Molverhältnis der Carbonsäure zu Zink in der Zinkverbindung 0,7 zu 1 bis 1 zu 0,7 beträgt. Die Zinkverbindung kann auch als Zinksalz oder Zinkkomplex bezeichnet werden. Die Herstellung der erfindungsgemä-βen Zinkverbindungerfolgt erfolgt aus mindestens einer Zinkquelle und mindestens einer verzweigten, aliphatischen C₅- bis C₃₀-Carbonsäure in einem Molverhältnis von Carbonsäure zu Zink von 0,7 zu 1 bis 1 zu 0,7.

In einer bevorzugten Ausführungsform wird die in der erfindungsgemäßen Kautschukzusammensetzung eingesetzte Zinkverbindung durch Erhitzen eines Gemischs aus mindestens einer Zinkquelle und mindestens einer Carbonsäure hergestellt, vorzugsweise unter Druck. In einer bevorzugten Ausführungsform wird das Gemisch aus Zinkquelle und Carbonsäure bei einem Druck von 1 bis 3 atm auf Temperaturen von 25 bis 250°C, vorzugsweise 80 bis 180°C und insbesondere 100 bis 150°C.

Die Zinkquelle kann ausgewählt sein aus den Klassen der Hydroxide, Oxide, Chloride oder Nitrate oder Mischungen davon.

In einer Ausführungsform ist die Zinkverbindung hergestellt aus mindestens einer verzweigten, aliphatischen C₅- bis C₃₀-Carbonsäure und einer Zinkquelle ausgewählt aus Zinkhydroxid, Zinkoxid, Zinkchlorid, Zinknitrat, oder Mischungen davon, vorzugsweise Zinkoxid.

Die Zinkverbindung umfasst eine Carbonsäurekomponente, welche auf mindestens einer gesättigten oder ungesättigten, verzweigten C₅- bis C₃₀-Carbonsäure beruht. Dies bedeutet, dass die eine oder mehreren Carbonsäure(n) 5 bis 30 Kohlenstoffatome aufweisen. Es sei angemerkt, dass unter Carbonsäuren üblicherweise aliphatische gesättigte Carbonsäuren mit einer nichtlinearen Kohlenstoff-Kette verstanden werden. Erfindungsgemäß werden unter "Carbonsäuren" auch solche Säuren verstanden, die Ungesättigtheiten aufweisen. Ferner können Heteroatome vorhanden sein, solange dies den aliphatischen Charakter der Säuren nicht wesentlich beeinträchtigt.

In einer Ausführungsform der Erfindung wurde die Zinkverbindung aus einem Gemisch aus verschiedenen Carbonsäuren hergestellt. Die Carbonsäurekomponente kann mindestens zwei, wie mindestens drei, vier oder fünf verschiedene C₅- bis C₃₀-Carbonsäuren umfassen. In einer weiteren Ausführungsform besteht die Carbonsäurekomponente aus einem Gemisch an isomeren verzweigten, aliphatischen Carbonsäuren mit der gleichen Anzahl an Kohlenstoffatomen. In einer weiteren Ausführungsform besteht die Carbonsäurekomponente aus nur einer bestimmten verzweigten, aliphatischen C₅- bis C₃₀-Carbonsäure.

Typische Beispiele für Carbonsäuren, die als Carbonsäurekomponente in der vorliegenden Erfindung eingesetzt werden können sind Iso- und Neosäuren, wie auch Naphthensäuren und natürlich vorkommende nichtlineare Carbonsäuren.

In einer Ausführungsform ist die mindestens eine Carbonsäure eine C₆- bis C₂₀-Carbonsäure, vorzugsweise eine C₇- bis C₁₂-Carbonsäure, wie C₈- bis C₁₀-Carbonsäure.

In einer Ausführungsform ist die mindestens eine Carbonsäure eine gesättigte C₆- bis C₂₀-Carbonsäure, vorzugsweise eine gesättigte C₇- bis C₁₂-Carbonsäure, wie gesättigte C₈- bis C₁₀-Carbonsäure und insbesondere Isononansäure. Hierbei bezeichnet Isononansäure ein Gemisch isomerer, verzweigtkettiger Carbonsäuren mit neun Kohlenstoffatomen, das zu mehr als 85 % aus 3,5,5-Trimethylhexansäure besteht.

In einer Ausführungsform der Erfindung wurde die Zinkverbindung aus einer Zinkquelle und Isononansäure hergestellt.

In einer Ausführungsform besteht die in der erfindungsgemäßen Kautschukzusammensetzung enthaltende Zinkverbindung nur aus Zink, Kohlenstoff, Wasserstoff und Sauerstoff.

In einer Ausführungsform der Erfindung beträgt das Molverhältnis von Carbonsäure zu Zink in der Zinkverbindung 0,8 zu 1 bis 1 zu 0,8, wie 0,95 zu 1 bis 1 zu 0,95, vorzugsweise 1 zu 1.

In einer Ausführungsform der Erfindung weist die Zinkverbindung einen Zinkkationengehalt von 20 bis 33% Zn²⁺, vorzugsweise 20 bis 30 Gew.-% und insbesondere 23 bis 28 Gew.-% auf. Der Zinkgehalt kann mittels DIN 55908, genauer DIN 55908 - Teil 2 bestimmt werden.

In einer Ausführungsform der Erfindung weist die Zinkverbindung einen Tropfpunkt von 110 bis 120°C auf, wie 110 bis 115°C. Die Messung des Tropfpunktes kann mittels DIN ISO 2176/97 erfolgen.

In einer Ausführungsform der Erfindung weist die Zinkverbindung einen Erweichungspunkt (Cup & Ball) von 90 bis 115°C auf, wie 100 bis 110°C. Die Messung des Erweichungspunktes kann beispielsweise mittels DIN 51920 erfolgen.

In einer Ausführungsform der Erfindung weist die Zinkverbindung ein Thermogramm, gemessen mittels Dynamischer Differenzkalorimetrie (Differential Scanning Calorimetry, DSC) gemäß DIN 51007 auf, welches einen endothermen Peak im Temperaturbereich von 60 bis 120°C, wie 60 bis 110°C aufweist. Die Peakspitze liegt vorzugsweise im Temperaturbereich von 101 bis 105°C. Weiterhin weist das Thermogramm der Zinkverbindung vorzugsweise keinen weiteren Peak im Temperaturbereich von 30 bis 60°C auf.

In einer Ausführungsform der Erfindung weist die Zinkverbindung ein DSC-Thermogramm auf welches einen endothermen Peak im Temperaturbereich von 60 bis 120°C, wie 60 bis 110°C und eine Peakspitze im Temperaturbereich von 101 bis 105°C aufweist und keinen weiteren Peak im Temperaturbereich von 30 bis 60°C aufweist.

In einer Ausführungsform der Erfindung weist die Zinkverbindung mindestens zwei, oder alle der folgenden Eigenschaften auf:
- Tropfpunkt von 110 bis 120°C, insbesondere 110 bis 115°C, wie gemäß DIN ISO 2176/97 gemessen;
- Erweichungspunkte von 90 bis 115°C, insbesondere 100 bis 110°C, wie gemäß DIN 51920 gemessen;
- Thermogramm, gemessen mittels Dynamische Differenzkalorimetrie (Differential Scanning Calorimetry, DSC) gemäß DIN 51007, welches einen endothermen Peak im Temperaturbereich von 60 bis 120°C, wie 60 bis 110°C und insbesondere eine Peakspitze im Temperaturbereich von 101 bis 105°C aufweist und keinen weiteren Peak im Temperaturbereich von 30 bis 60°C aufweist.

In einer Ausführungsform der Erfindung liegt die Zinkverbindung in fester Form vor und wird in fester Form in die Kautschukzusammensetzung eingebracht. Die Zinkverbindung kann in Form einer oder mehrere Pastillen in die Kautschukzusammensetzung eingebracht werden, wobei die Pastillen vorzugweise kein Trägermaterial umfassen. In einer Ausführungsform wird die Zinkverbindung in Form einer oder mehrere Pastillen, welche mindestens 95 Gew.-% Zinkverbindung oder mindestens 98 Gew.-% Zinkverbindung umfasst, in die Kautschukzusammensetzung eingebracht. In einer weiteren Ausführungsform besteht die eine oder mehrere Pastillen im Wesentlichen aus der Zinkverbindung, welche ein Molverhältnis von Carbonsäure zu Zink von 0,7 zu 1 bis 1 zu 0,7 aufweist. Es können auch mehrere erfindungsgemäße Zinkverbindungen in einer Pastille vorliegen. Die Pastille kann in allen Ausführungsformen von außen mit einer Schicht aus Trennmittel bedeckt sein.

In einer weiteren Ausführungsform der Erfindung wird die Zinkverbindung in Form eines Pulvers in die Kautschukzusammensetzung eingebracht. In diesem Fall kann das Pulver aus der erfindungsgemäßen Zinkverbindung bestehen

In einer weiteren Ausführungsform wird die Zinkverbindung in Form einer Abmischung in die Kautschukzusammensetzung eingebracht, wobei die Abmischung neben der Zinkverbindung vorzugweise ein oder mehrere feste Trägermaterialien sowie gegebenenfalls weitere Bestandteile enthält. Es können auch mehrere erfindungsgemäße Zinkverbindungen in einer Abmischung vorliegen.

Als Trägermaterial können vorzugsweise anorganische Füllstoffe (wie beispielsweise Kieselsäuren) oder wachsartige Materialien (wie beispielsweise Polyethylenwachse) verwendet werden. Beispiele von kommerziell erhältlichen Kieselsäuren, die in der Abmischung der vorliegenden Erfindung verwendet werden können, sind Sipernat 22 und Sipernat 50 von Evonik. In einer bevorzugten Ausführungsform wird als Trägermaterial Kieselsäure verwendet. Als weitere Bestandteile können in der Abmischung z. B. Amide, Aminoalkohole und Seifen eingesetzte werden.

In einer Ausführungsform wird in der erfindungsgemäßen Kautschukzusammensetzung eine Abmischung als Zinkverbindung eingesetzt, die
a) ein oder mehrere feste Trägermaterialien, vorzugsweise Kieselsäure, und
b) eine oder mehrere erfindungsgemäße Zinkverbindung(en), sowie
c) gegebenenfalls weitere Bestandteile wie Amide, Aminoalkohole und/oder Seifen enthält.

Das Gewichtsverhältnis von Trägermaterial zu Zinkverbindung in der Abmischung beträgt beispielsweise 10/90 bis 90/10, bevorzugter 20/80 bis 80/20 und besonders bevorzugt etwa 30/70 oder 33/67.

### Verfahren zur Herstellung der Zinkverbindung

Weiterhin betrifft die vorliegende Erfindung ein Verfahren zur Herstellung der erfindungsgemä-βen Zinkverbindungbei welchem Verfahren:
i) mindestens eine verzweigte, aliphatische C₅- bis C₃₀-Carbonsäure und mindestens eine Zinkquelle ausgewählt aus Zinkhydroxid, Zinkoxid, Zinkchlorid, Zinknitrat, oder Mischungen davon, vorzugsweise Zinkoxid, vermischt werden,
ii) das in i) hergestellte Gemisch bei einem Druck von 1 bis 3 atm auf Temperaturen von 25 bis 250°C, vorzugsweise 80 bis 180°C und insbesondere 100 bis 150°C erhitzt wird, um Zinkverbindung mit einem Molverhältnis von Carbonsäure zu Zink von 0,7 zu 1 bis 1 zu 0,7 zu erhalten, und
iii) gegebenenfalls die in ii) erhaltene Zinkverbindung in die Form von einer oder mehrere Pastillen gebracht wird.

Die Reaktion kann als Fällungsreaktion oder im geschmolzenen Zustand ohne Zusatz von Lösungsmittel durchgeführt werden. Ferner können Katalysatoren wie beispielsweise hypophosphorige Säure, Methansulfonsäure, Butansulfonsäure, p-Toluolsulfonsäure, Naphthalinsulfonsäure, Alkylbenzolsulfonsäure, Sulfobernsteinsäure, Wasser, Amine und/oder Mischungen davon vor Beginn der Umsetzung in Schritt ii) hinzugegeben werden.

Im Schritt iii) kann das Produkt bei 115 bis 120 °C anschließend direkt auf das Kühlband gegeben werden, um die Zinkverbindung in die Form von Pastillen zu bringen. Die Pastillen können ggf. mit Trennmittel bestäubt werden. Die Pastillen enthalten vorzugweise aber kein Trägermaterial.

### Kautschuk

Die erfindungsgemäße Kautschukzusammensetzung umfasst eine größere Menge Kautschuk (*d. h.* mehr als 50 Gew.-%, bezogen auf das Gesamtgewicht der Zusammensetzung). Es können ein Kautschuk oder auch mehrere verschiedene Kautschuke im Verschnitt eingesetzt werden.

Bevorzugte Kautschuke sind Dien-Kautschuke. Als Dien-Kautschuke werden Kautschuke bezeichnet, die durch Polymerisation oder Co-polymerisation von Dienen und/oder Cycloalkenen entstehen und somit entweder in der Hauptkette oder in den Seitengruppen C=C-Doppelbindungen aufweisen. Bevorzugte Dien-Kautschuke sind Butadien-Kautschuk, Polyisopren, Styrol-Butadien-Kautschuk, Naturkautschuk, Acrylnitril-Butadien-Kautschuk, Ethylen-Propylen-Dien-Kautschuk, Fluorkautschuk und thermoplastisches Elastomer.

In einer Ausführungsform sind mindestens 80 Gew.%, wie 90 Gew.% oder 95 Gew.% der eingesetzten Kautschuke in der Kautschukzusammensetzung Dien-Kautschuke.

In einer Ausführungsform besteht der in der Kautschukzusammensetzung eingesetzte Kautschuk aus einem oder mehreren Dien-Kautschuk(en), d.h. alle Kautschuke, die in der Kautschukzusammensetzung vorhanden sind, sind Dien-Kautschuke.

In einer Ausführungsform umfasst die Kautschukzusammensetzung mindestens einen Naturkautschuk.

In einer Ausführungsform sind mindestens 80 Gew.%, wie 90 Gew.% oder 95 Gew.% der eingesetzten Kautschuke in der Kautschukzusammensetzung Naturkautschuk. In einer Ausführungsform sind alle Kautschuke, die in der Kautschukzusammensetzung vorhanden sind, Naturkautschuk, d.h. die Kautschukzusammensetzung umfasst ausschließlich einen oder mehrere Naturkautschuke als Kautschukkomponente.

Bei Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%. Ferner ist auch ein Gemisch eines oder mehrerer natürlicher Polyisoprene mit einem oder mehreren synthetischen Polyisoprenen denkbar.

Bei Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind Styrol-Butadien-Copolymere mit einer gewichtsmittlere Molmasse (Mw) im Bereich von 200.000 bis 600.000 g/mol und/oder einem zahlenmittlere Molmasse (Mn) im Bereich von 100.000 bis 250.000 g/mol.

Bei dem Butadien-Kautschuk (BR, Polybutadien) kann es sich um alle dem Fachmann bekannten Typen mit einem Mw von 250000 bis 5000000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%

### Weitere Kautschuk-Komponenten

Neben den bereits ausführlich erläuterten, erfindungswesentlichen Bestandteilen, kann die Kautschukzusammensetzung weitere, in der Kautschukindustrie übliche Kautschukadditive und Bestandteile enthalten. Derartige Kautschuk-Komponenten werden im Folgenden erläutert.

In einer bevorzugten Ausführungsform umfasst die Kautschukzusammensetzung der vorliegenden Erfindung eine oder mehrere der folgenden Kautschuk-Komponenten ausgewählt aus der Gruppe von Füllstoffen, oder Aktivatoren für eine Schwefel, peroxidische oder aminische Vernetzung, Alterungsschutzmittel, Wachse, Harze, Mastikationshilfsmittel, Weichmacher, Beschleuniger, Verzögerer und/oder Verarbeitungshilfsmittel.

Bevorzugt enthält die Kautschukzusammensetzung mindestens einen Füllstoff. Die Kautschukzusammensetzung kann 5 bis 300 phr, bevorzugt 30 bis 300 phr, insbesondere 50 bis 200 phr wenigstens eines Füllstoffs enthalten, wobei die Gesamtmenge an allen enthaltenen Füllstoffen gemeint ist.

Hierbei kann es sich um alle dem Fachmann bekannten Füllstoffe handeln, wie Ruß, Kohlenstoffnanoröhrchen, Kieselsäure, Alumosilikate, Schichtsilicate wie Kaolin, Calciumcarbonat (Kreide), Stärke, Calciumcarbonat, Bariumsulfat, Magnesiumoxide, Aluminiumoxide, Titandioxid, oder Kautschukgele. Weiterhin sind Kohlenstoffnanoröhrchen (carbon nanotubes (CNT) inklusive diskreter CNTs, sogenannte "hollow carbon fibers" (HCF) und modifizierte CNT enthaltend eine oder mehrere funktionelle Gruppen, wie Hydroxy-, Carboxy und Carbonyl-Gruppen) denkbar.

In der Kautschukmischung können Weichmacher in üblichen Mengen enthalten sein. Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze oder Flüssig-Polymere, wie flüssiges Polybutadien - auch in modifizierter Form - eingesetzt werden. Der oder die Weichmacher werden bei der Herstellung der erfindungsgemäßen Kautschukmischung bevorzugt in wenigstens einer Grundmischstufe zugegeben.

Die Kautschukmischung kann weiterhin Harze enthalten. Die Harze können hierbei die Härte erhöhen, oder die mechanischen Eigenschaften des vulkanisierten Kautschuks beeinflussen. Auch die Haftung wird verbessert, wobei zum einen die Gummi-Gummi- und Gummi-Metall-Haftung gemeint ist. Zum anderen können durch Harze die Hystereseeigenschaften (tan delta) im finalen Produkt verändert werden, was die Haftung z.B. eines Reifens auf der Straße (Grip) verbessert. Beispielsweise wurde bei der Entwicklung von Laufstreifenmischungen für Ultra High Performance- (UHP) und Sommerreifen in den letzten Jahren versucht, Verbesserungen von Eigenschaften wie Reifengrip, Reifenabrieb und Reifenhandling zu erreichen. Für diesen Zweck wurde den zur Reifenherstellung verwendeten Kautschukzusammensetzungen für UHP- und Sommerreifen ein hoher Harzanteil, z. B. auf Basis von Alpha-Methylstyrol- und/oder Coumaronharzen zugesetzt.

Generell wird unterschieden zwischen Weichmacherharzen, die die Flexibilität der Kautschukmischung und des vulkanisierten Gummis erhöhen und Verstärkerharzen, die die Steifigkeit und Festigkeit des vulkanisierten Gummis erhöhen, ohne seine Flexibilität zu beeinträchtigen. Außerdem gibt es Klebharze (sog. Tackifier Resins), welche verwendet werden um die Klebrigkeit (Tack) von unvulkanisierten Kautschukmischungen zu erhöhen. Das ist z.B. dort wichtig, wo verschiedene Kautschukmischungen miteinander kombiniert werden, bevor sie vulkanisiert werden, wie z.B. im Reifenbereich. Als Harze können alle dem Fachmann bekannten Harze wie z.B. Phenol- oder Alkylphenolharze, Terpenharze, Kolophoniumharze, Pentaerythritolesterharze, Petroleumharze, epoxidierte Harze oder auch einfach Kohlenwasserstoffharze eingesetzte werden.

Die Kautschukzusammensetzung enthält vorzugsweise ferner für die Vernetzung benötigte Substanzen; die am häufigsten verwendeten Vernetzungssysteme sind die Schwefelvernetzung und die Peroxidvernetzung. Für die Schwefelvernetzung wird zum einen Schwefel selbst benötigt und zusätzlich sogenannte Beschleuniger (Basen, Dithiocarbamate, Thiurame, Thiazole, Sulfenamide oder Guanidine) und/oder Verzögerer (Säuren, Nitroso- und Chlorverbindungen, sowie Sulfoanilide und Phthalimide). Bei der Peroxidvernetzung werden organische Peroxide verwendet, die als Radikalstarter fungieren (etwa Dicumylperoxid, Dibenzoylperoxid, oder andere); diese benötigen außerdem noch weitere Co-Agenzien, welche die Vernetzung unterstützen (Cyanurate, Methyacrylate oder bestimmte Imide).

Als Aktivatoren können beispielsweise Zinkoxid und Carbonsäuren (z. B. Stearinsäure) eingesetzt werden. Das Zinkoxid liefert Zink-Ionen (Zn²⁺), welche mit den Beschleunigern und Schwefel Komplexe bilden und so den Schwefel für die Reaktion "aktivieren". Die erfindungsgemäße Kautschukzusammensetzung umfasst vorzugweise 0,5 bis 10 phr, vorzugsweise 2 bis 5 phr Aktivatoren.

In einer Ausführungsform umfasst die Kautschukzusammensetzung neben der oben beschriebenen Zinkverbindung mit einem Molverhältnis von Carbonsäure zu Zink 0,7 : 1 bis 1 : 0,7, noch weitere Zinkverbindungen und/oder Carbonsäureseifen, insbesondere Zink- und/oder Kalium-Carbonsäureseife, wie zum Beispiel Zinkstearat und/oder Zink-Kaliumstearat. Die Zink- Carbonsäureseife können hierbei als interne Gleitmittel fungieren. Hierbei liegen die Seifen als kleinere langkettige Moleküle zwischen den Polymerketten und lassen diese leichtere relativ zueinander gleiten. Dadurch werden die Fließeigenschaften der Polymere bei der Verarbeitung (Mischen, Walzen, Extrudieren, etc.) verbessert.

Des Weiteren kann die Kautschukzusammensetzung übliche Zusatzstoffe in üblichen Gewichtsteilen enthalten, die bei deren Herstellung bevorzugt in wenigstens einer Grundmischstufe zugegeben werden. Die Zusatzstoffe können ausgewählt sein aus der Liste bestehend aus Alterungsschutzmittel, Aktivatoren, Wachse, Harze, Mastikationshilfsmittel und Verarbeitungshilfsmittel und Mischungen davon.

Als Alterungsschutzmittel können beispielsweise N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD) und 2,2,4-Trimethyl-1,2-dihydrochi-nolin (TMQ)eingesetzt werden. Die erfindungsgemäße Kautschukzusammensetzung umfasst vorzugweise 0,1 bis 3 phr Alterungsschutzmittel.

Die erfindungsgemäße Kautschukzusammensetzung umfasst vorzugweise 0,1 bis 3 phr Wachse.

Als Mastikationshilfsmittel kann beispielsweise 2,2'-Dibenzamidodiphenyldisulfid (DBD) eingesetzt werden. Die erfindungsgemäße Kautschukzusammensetzung umfasst vorzugsweise 0,1 bis 3 phr Mastikationshilfsmittel.

Insbesondere enthält die Kautschukzusammensetzung:
a) 0,1 bis 3 phr Alterungsschutzmittel,
b) 0,5 bis 10 phr, vorzugsweise 2 bis 5 phr Aktivatoren,
c) 0,1 bis 3 phr Wachse,
d) 5 bis 100 phr, vorzugsweise 15 bis 50 phr von Weichmacher und/oder Harze,
e) 0,1 bis 3 phr Mastikationshilfsmittel,
f) 0,5 bis 10 phr, vorzugsweise 2 bis 5 phr Verarbeitungshilfsmittel, und
g) 5 bis 300 phr Füllstoffe.

Der Mengenanteil der Gesamtmenge an weiteren Zusatzstoffen beträgt 3 bis 150 phr, bevorzugt 3 bis 100 phr und besonders bevorzugt 5 bis 80 phr.

### Kautschukzusammensetzung

Die erfindungsgemäße Kautschukzusammensetzung umfasst eine größere Menge Kautschuk (*d. h.* mehr als 50 Gew.-%, bezogen auf das Gesamtgewicht der Zusammensetzung), und eine kleinere Menge Zinkverbindung (*d. h.* weniger als 50 Gew.-%, bezogen auf das Gesamtgewicht der Zusammensetzung) sowie gegebenenfalls weitere Kautschukkomponenten. Die Kautschukzusammensetzung kann in bekannter Weise vernetzt werden.

In einer Ausführungsform umfasst die Kautschukzusammensetzung 0,5 bis 10 phr, vorzugsweise 1 bis 7 phr, insbesondere 2 bis 5 phr Zinkverbindung, bezogen auf das Gesamtgewicht der Kautschukzusammensetzung.

In einer Ausführungsform umfasst die Kautschukzusammensetzung
a) eine größere Menge Kautschuk,
b) 0,5 bis 10 phr Zinkverbindung, hergestellt aus mindestens einer verzweigten, aliphatischen C₅- bis C₃₀-Carbonsäure und mindestens einer Zinkquelle, wobei das Molverhältnis von Carbonsäure zu Zink in der Zinkverbindung 0,7 : 1 bis 1 : 0,7 beträgt.
c) 5 bis 300 phr von einem oder mehrerer Füllstoffe.

In einer Ausführungsform umfasst die Kautschukzusammensetzung
a) eine größere Menge von einem oder mehrere Dien-Kautschuk(e), wobei der oder die Dien-Kautschuk(e) vorzugsweise ausgewählt ist/sind aus Butadien-Kautschuk, Polyisopren, Styrol-Butadien-Kautschuk, Naturkautschuk, Acrylnitril-Butadien-Kautschuk, Ethylen-Propylen-Dien-Kautschuk, Fluorkautschuk und thermoplastisches Elastomer, insbesondere Naturkautschuk.
b) 0,5 bis 10 phr Zinkverbindung, hergestellt aus mindestens einer verzweigten, aliphatischen C₇- bis C₁₂-Carbonsäure und mindestens einer Zinkquelle, wobei das Molverhältnis von Carbonsäure zu Zink in der Zinkverbindung 0,8 : 1 bis 1 : 0,8 beträgt;
c) 5 bis 300 phr von einen oder mehreren Füllstoffen.

In einer Ausführungsform umfasst die Kautschukzusammensetzung
a) eine größere Menge von einem oder mehrere Dien-Kautschuk(e), wobei der oder die Dien-Kautschuk(e) vorzugsweise ausgewählt ist/sind aus Butadien-Kautschuk, Polyisopren, Styrol-Butadien-Kautschuk, Naturkautschuk, Acrylnitril-Butadien-Kautschuk, Ethylen-Propylen-Dien-Kautschuk, Fluorkautschuk und thermoplastisches Elastomer, insbesondere Naturkautschuk.
b) 0,5 bis 10 phr Zinkverbindung, hergestellt aus mindestens einer verzweigten, aliphatischen, gesättigten C₇- bis C₁₂-Carbonsäure und mindestens einer Zinkquelle, wobei das Molverhältnis von Carbonsäure zu Zink in der Zinkverbindung 0,8 : 1 bis 1 : 0,8 beträgt;
c) 5 bis 300 phr von einen oder mehreren Füllstoffen, wobei die Kautschukzusammensetzung ausschließlich Dien-Kautschuk(e), vorzugsweise Naturkautschuk als Kautschuk-Komponenten enthält.

In einer Ausführungsform umfasst die Kautschukzusammensetzung
a) eine größere Menge von einem oder mehrere Dien-Kautschuk(e), wobei der oder die Dien-Kautschuk(e) vorzugsweise ausgewählt ist/sind aus Butadien-Kautschuk, Polyisopren, Styrol-Butadien-Kautschuk, Naturkautschuk, Acrylnitril-Butadien-Kautschuk, Ethylen-Propylen-Dien-Kautschuk, Fluorkautschuk und thermoplastisches Elastomer, insbesondere Naturkautschuk.
b) 0,5 bis 10 phr Zinkverbindung, hergestellt aus mindestens einer verzweigten, aliphatischen C₇- bis C₁₂-Carbonsäure und mindestens einer Zinkquelle, wobei das Molverhältnis von Carbonsäure zu Zink in der Zinkverbindung 0,7 : 1 bis 1 : 0,7 beträgt;
c) 5 bis 300 phr von einem oder mehrerer Füllstoffe,
   und mindestens eines, vorzugweise mindestens 2, 3, 4, 5 oder alle von:
   d) 0,1 bis 3 phr Alterungsschutzmittel,
   e) 0,5 bis 10 phr, vorzugsweise 2 bis 5 phr Aktivatoren,
   f) 0,1 bis 3 phr Wachse,
   g) 5 bis 100 phr, vorzugsweise 15 bis 50 phr Harze,
   h) 0,1 bis 3 phr Mastikationshilfsmittel, und
   f) 0,5 bis 10 phr, vorzugsweise 2 bis 5 phr Verarbeitungshilfsmittel.

In einer Ausführungsform umfasst die Kautschukzusammensetzung
a) eine größere Menge von einem oder mehrere Dien-Kautschuk(e), wobei der oder die Dien-Kautschuk(e) vorzugsweise ausgewählt ist/sind aus Butadien-Kautschuk, Polyisopren, Styrol-Butadien-Kautschuk, Naturkautschuk, Acrylnitril-Butadien-Kautschuk, Ethylen-Propylen-Dien-Kautschuk, Fluorkautschuk und thermoplastisches Elastomer, insbesondere Naturkautschuk.
b) 0,5 bis 10 phr Zinkverbindung, hergestellt aus mindestens einer verzweigten, aliphatischen C₇- bis C₁₂-Carbonsäure und mindestens einer Zinkquelle, wobei das Molverhältnis von Carbonsäure zu Zink in der Zinkverbindung 0,7 : 1 bis 1 : 0,7 beträgt;
c) 5 bis 300 phr von einem oder mehrerer Füllstoffe,
d) 0,1 bis 3 phr Alterungsschutzmittel, und
e) 0,5 bis 10 phr, vorzugsweise 2 bis 5 phr Aktivatoren.

In einer Ausführungsform umfasst die Kautschukzusammensetzung
a) eine größere Menge von einem oder mehrere Dien-Kautschuk(e), wobei der oder die Dien-Kautschuk(e) vorzugsweise ausgewählt ist/sind aus Butadien-Kautschuk, Polyisopren, Styrol-Butadien-Kautschuk, Naturkautschuk, Acrylnitril-Butadien-Kautschuk, Ethylen-Propylen-Dien-Kautschuk, Fluorkautschuk und thermoplastisches Elastomer, insbesondere Naturkautschuk,
b) 0,5 bis 10 phr Zinkverbindung, hergestellt aus mindestens einer verzweigten, aliphatischen C₇- bis C₁₂-Carbonsäure und mindestens einer Zinkquelle, wobei das Molverhältnis von Carbonsäure zu Zink in der Zinkverbindung 0,7 : 1 bis 1 : 0,7 beträgt;
c) 5 bis 300 phr von einem oder mehrerer Füllstoffe,
d) 0,1 bis 3 phr Alterungsschutzmittel,
e) 0,5 bis 10 phr, vorzugsweise 2 bis 5 phr Aktivatoren, wobei die Kautschukzusammensetzung ausschließlich Dien-Kautschuk(e), vorzugsweise Naturkautschuk als Kautschuk-Komponenten enthält.

Die Zinkverbindung kann in einer sogenannten "on top" Verwendung in eine bereits bestehende Kautschukzusammensetzung dazu dosiert werden.

Die Kautschukzusammensetzung kann für unterschiedlichste Gummiartikel, wie beispielsweise Bälge, Förderbänder, Luftfedern, Gurte, Riemen, Schläuche, Gummibänder oder Schuhsohlen, eingesetzt werden. Die Kautschukzusammensetzung kann auch in Fahrzeugreifen verwendet werden, wobei darunter Fahrzeugluftreifen und Vollgummireifen, inklusive Reifen für Industrie- und Baustellenfahrzeuge, LKW-, PKW- sowie Zweiradreifen zu verstehen sind. Die Kautschukzusammensetzung wird bevorzugt in Nutzfahrzeugreifen eingesetzt. Unter Nutzfahrzeugreifen werden dabei Reifen für solche Kraftfahrzeuge verstanden, die nach ihrer Bauart und Einrichtung zum Transport von Personen oder Gütern bestimmt sind, oder zum Ziehen von Anhängern, aber keine Personenkraftwagen oder Krafträder sind (z. B. Busse, Lastkraftwagen, Nutzfahrzeuge für Einsatzkräfte, Traktoren, Baustellenfahrzeuge, u. a.).

Die Herstellung der erfindungsgemäßen Kautschukzusammensetzung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in einer oder mehreren Mischstufen hergestellt und im Anschluss durch Zugabe des Vulkanisationssystems die Fertigmischung erzeugt wird. Das allgemeine Verfahren zur Herstellung von Kautschukzusammensetzungen und deren Vulkanisate ist in "Rubber Technology Handbook", W. Hofmann, Hanser Verlag 1994 beschrieben. Dem Fachmann ist bekannt, dass ggf. je nach Mischung, insbesondere je nach Füllstoffgehalt, weitere Mischstufen nach der ersten Grundmischstufe durchzuführen sind, um eine bessere Absenkung der Viskosität und eine bessere Homogenisierung zu erreichen.

Anschließend kann die Zusammensetzung weiterverarbeitet werden, z. B. durch einen Extrusionsvorgang, und in die entsprechende Form, z. B. die Form eines Laufstreifenrohlings, gebracht werden.

### Verwendung

Die vorliegende Erfindung betrifft weiterhin die Verwendung der erfindungsgemäßen Zinkverbindung als Verarbeitungshilfe in Dien-Kautschuk(en), wobei der oder die Dien-Kautschuk(e) ausgewählt ist/sind aus Butadien-Kautschuk, Polyisopren, Styrol-Butadien-Kautschuk, Naturkautschuk, Acrylnitril-Butadien-Kautschuk, Ethylen-Propylen-Dien-Kautschuk, Fluorkautschuk und thermoplastisches Elastomer.

In einer bevorzugten Ausführungsform wird die erfindungsgemäße Zinkverbindung in Kautschukzusammensetzungen eingesetzt, die mindestens einen Naturkautschuk umfassen oder ausschließlich Naturkautschuk als Kautschukkomponente enthalten.

Die vorliegende Erfindung betrifft weiterhin die Verwendung der erfindungsgemäßen Zinkverbindung zur Erhöhung der Reversionsstabilität von Kautschukzusammensetzungen. Die Verbesserung der Reversionsstabilität führt dazu, dass die Vernetzung höher ausfällt und damit die chemisch physikalischen Eigenschaften; wie die Zugfestigkeit als auch dynamisch mechanische Eigenschaften verbessert werden.

Die vorliegende Erfindung betrifft weiterhin die Verwendung der erfindungsgemäßen Zinkverbindung in einer Kautschukzusammensetzung zur Absenkung der Mooney-Viskosität, welche dem Fachmann die Einschätzung der generellen Verarbeitbarkeit der Kautschukmischung ermöglicht und/oder Extrusionseigenschaften der Kautschukzusammensetzung (Fließfähigkeit des Kautschuks in der Extruderdüse und in der Form, Spritzquellung, Extrusionsrate, Materialdruck, Oberflächengüte, etc.).

In einer bevorzugten Ausführungsform führen die oben beschriebenen Verwendungen der erfindungsgemäßen Zinkverbindung zu einer Verbesserung einer oder beider der folgenden Eigenschaften um mindestens 5 %, vorzugsweise mindestens 10 % gegenüber einer ansonsten gleichen Kautschukzusammensetzung, die eine Zinkverbindung von mindestens einer verzweigten, aliphatischen C₅- bis C₃₀- Carbonsäure enthält, wobei die Zinkverbindung ein Molverhältnis von Carbonsäure zu Zink außerhalb des Bereichs von 0,7 zu 1 bis 1 zu 0,7 aufweist:
- Reversionsstabilität, gemessen als die Zeit, die für eine 3% Reversion benötigt wird gemäß DIN 53529,
- Blow-out-Testung und/oder Heat-Build-Up, gemessen gemäß DIN 53533-3 bei 2 MPa statischer Belastung, Kammertemperatur von 50 °C und 6,35 mm Verformungsweg.

In einer bevorzugten Ausführungsform der erfindungsgemäßen Verwendung wird mindestens eine der genannten Eigenschaften gegenüber einer Kautschukzusammensetzung verbessert, die anstatt des erfindungsgemäßen Kautschukadditivs ein bekanntes Kautschukadditiv in identischer Menge umfasst. Als bekannte Kautschukadditive können im Stand der Technik bekannte Materialien, die als Kautschukadditive eingesetzt werden, verwendet werden. Zur Überprüfung werden zwei ansonsten identische Kautschukzusammensetzungen hergestellt und deren Eigenschaften anschließend miteinander verglichen.

In einer bevorzugten Ausführungsform wird mindestens eine der genannten Eigenschaften um mindestens 5 %, vorzugsweise mindestens 10 % verbessert gegenüber einer Kautschukzusammensetzung, die anstatt des erfindungsgemäßen Kautschukadditivs ein bekanntes Kautschukadditiv in identischer Menge umfasst.

### Ausführungsbeispiele

Die Erfindung soll nun anhand von Vergleichs- und Ausführungsbeispielen näher erläutert werden, ohne jedoch auf diese Beispiele beschränkt zu sein.

### Beispiel 1 - Herstellung der erfindungsgemäßen Zinkverbindungen

### a) Zinkverbindung A (1819)

Die Zusammensetzung der hergestellten Zinkverbindung A wird in der folgenden Tabelle 1 aufgeführt.

**Tabelle 1: Zusammensetzung von Zinkverbindung A**

| Pos. | Gew.-% | Rohstoff |
|---|---|---|
| 1 | 71,29 | Isononansäure |
| 2 | 0,01 | Entschäumer |
| 3 | 28,69 | Zinkoxid |
| 4 | 0,01 | Trennmittel |
| Gesamt | 100,00 | |

2141 g Isononansäure (bestehend aus 3,5,5-Trimhetylhexansäure und Isomeren) wurde bei Raumtemperatur in einem Stahl-Autoklav vorgelegt und gerührt. Anschließend wurden 0,1 g Entschäumer und 862 g Zinkoxid hinzugegeben. Das Reaktionsgemisch wurde mit Stickstoff inertisiert und hermetisch verschlossen und anschließend bei einem Druck von 1 bis 3 bar auf 130°C aufgewärmt. Nach Erreichen der Reaktionstemperatur, wurde diese min. 1 h gehalten. Anschließend wurde die Reaktortemperatur auf 115°C reduziert und das Produkt auf ein Kühlband gegeben und als Pastille erhalten, welche glasartig erstarrte. Die erhaltenen Pastillen wurden leicht mit Trennmittel bestäubt.

Der Zinkgehalt wurde entsprechend DIN 55908 (Teil 2) mit 23% bestimmt und der Erweichungspunkt (C+B) entsprechend DIN 51920 lag bei 110°C.

### b) Zinkverbindung B (1816)

Die Zusammensetzung der hergestellten Zinkverbindung B wird in der folgenden Tabelle 1 aufgeführt.

**Tabelle 2: Zusammensetzung von Zinkverbindung B**

| Pos. | Gew.-% | Rohstoff |
|---|---|---|
| 1 | 65,96 | Isononansäure |
| 2 | 0,01 | Entschäumer |
| 3 | 34,04 | Zinkoxid |
| 4 | 0,01 | Trennmittel |
| Gesamt | 100,00 | |

1980 g Isononansäure (bestehend aus 3,5,5-Trimhetylhexansäure und Isomere (Gehalt an 3,5,5-Trimhetylhexansäure ≥ 88.5 Gew.-%) wurde bei Raumtemperatur in einem Stahl-Autoklav vorgelegt und gerührt. Anschließend wurden 0,1 g Entschäumer und 1022 g Zinkoxid hinzugegeben. Das Reaktionsgemisch wurde mit Stickstoff inertisiert und hermetisch verschlossen und anschließend auf 130°C aufgewärmt. Nach Erreichen der Reaktionstemperatur, wurde diese 1 h gehalten. Anschließend wurde die Reaktortemperatur auf 115°C reduziert und das Produkt auf ein Kühlband gegeben und als Pastille erhalten, welche glasartig erstarrte. Die erhaltenen Pastillen wurden leicht mit Trennmittel bestäubt.

Der Zinkgehalt wurde mit 28% bestimmt und der Erweichungspunkt (C+B, ASTM D36-D36M) lag bei 110°C.

Die Eigenschaften der beiden hergestellten Zinkverbindungen sind in der folgenden Tabelle 3 zusammengefasst.

**Tabelle 3: Charakterisierung der hergestellten Zinkverbindungen**

| **Parameter** | | **Zinkverbindung A** | **Zinkverbindung B** |
|---|---|---|---|
| Zn²⁺ Gehalt | [%] | 23 | 27 |
| Erweichungspunkt (C+B, ASTM D36-D36M) | [°C] | 100-110 | 100-110 |
| Schmelzbereich (DSC, DIN51007) | [°C] | 70-115 | 70-115 |

### c) Herstellung von Vergleichszinkverbindungen mit anderer Stöchiometrie

Zu Vergleichszwecken wurden zwei Zinkverbindungen der Isononansäure mit anderer Stöchiometrie hergestellt und charakterisiert. Dazu wurde ein stöchiometrisches Verhältnis von 1 mol Zink zu 2 mol Isononansäure (Vergleichszinkverbindung 1:2), und 4 mol Zink zu 6 mol Isononansäure (Vergleichszinkverbindung 4:6) bei der Herstellung der Vergleichszinkverbindung verwendet. Außerhalb der eingesetzten Mengen wurde das Verfahren wie oben unter a) und b) beschreiben für die Herstellung der Vergleichszinkverbindung eingesetzt. Es wurde in beiden Fällen zähviskose Flüssigkeiten erhalten, bei denen eine Bestimmung des Tropfpunktes und des Erweichungspunktes nicht möglich war.

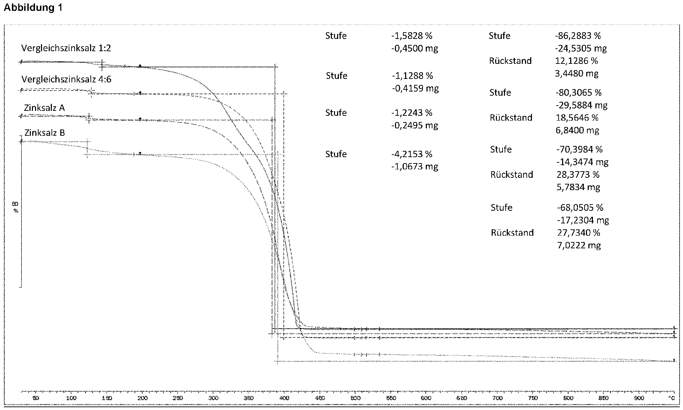

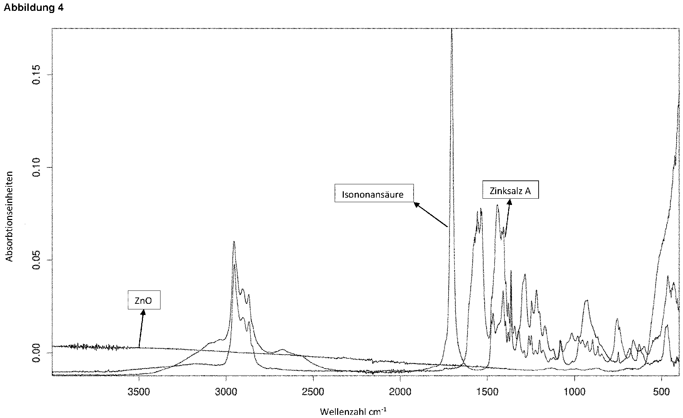

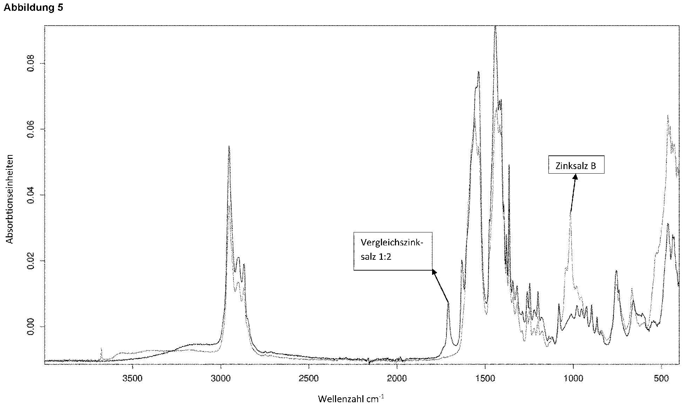

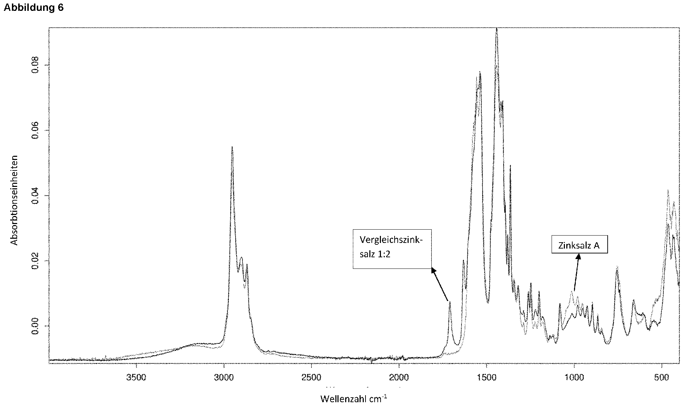

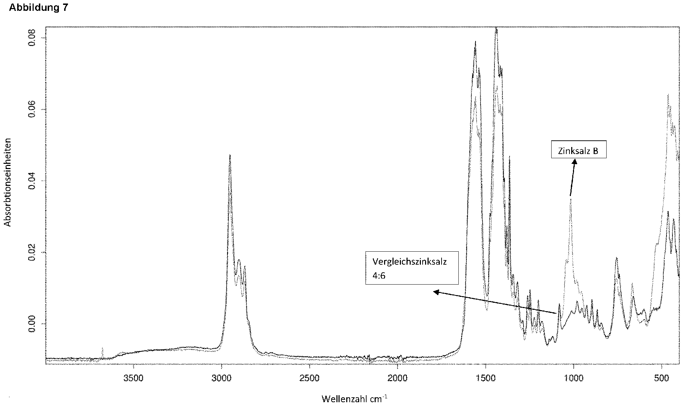

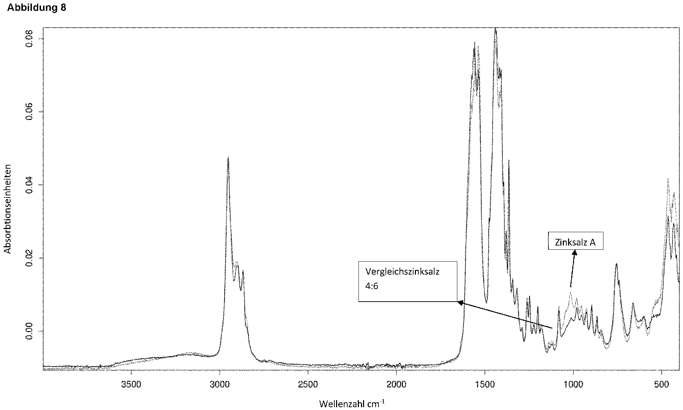

Die analytischen Gegenüberstellungen in Abbildungen 1 bis 8 zeigen Unterschiede zu den bekannten Zinkverbindungen mit einer Stöchiometrie von 1:2 bzw. 4:6 (Zink zu Carbonsäure) gegenüber den Zinkverbindungen A und B.

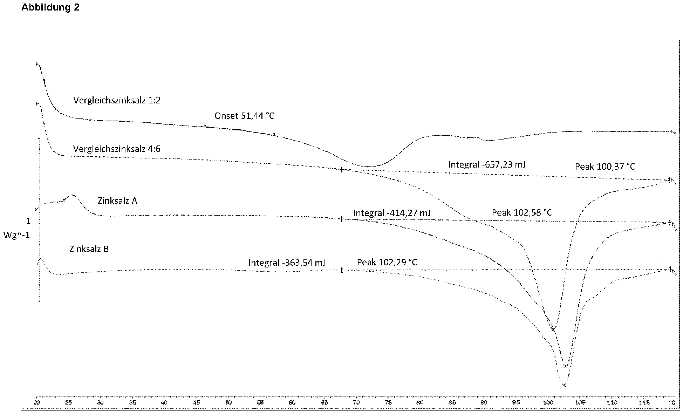

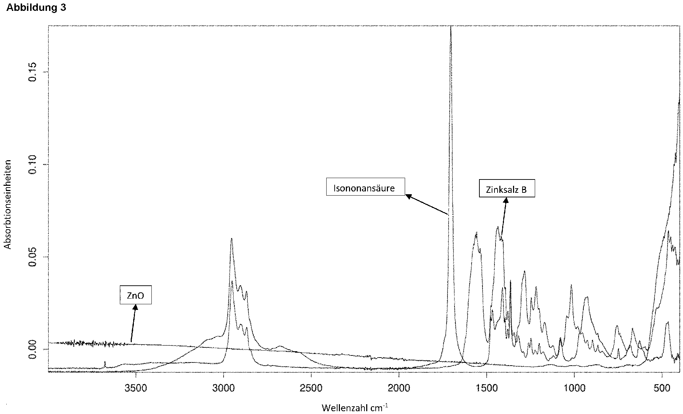

In den TGA Messungen (Abbildung 1) wurde nur ein Peak beobachtet, wohingegen beim Vorliegen von verschieden Verbindungen mehrere Peaks zu erwarten wären (z.B. im Falle einer nicht vollständigen Umsetzung oder der Bildung einer Mischung von Zinksalzen mit verschiedenen Stöchiomterien). Im IR (Abbildungen 3 bis 8) ist der charakteristische Zinkoxid-Peak im Fingerprint-Bereich nicht vorhanden und es haben sich neue Peaks gebildet. Auch in der DSC (Abbildung 2) wäre beim Vorliegen verschiedener Strukturen innerhalb einer Probe ein unterschiedlicher Graphen-Verlauf zu erwarten. Aus der Kombination der verschiedenen Messungen kann geschlossen, dass in Zinkverbindung A und B alles Zinkoxid umgesetzt wurde und ein 1:1-Komplex gebilet wurde.

Die hergestellten Vergleichszinkverbindungen der Isononansäure mit anderen Stöchiometrien zeigten nicht die gewünschten Eigenschaften auf (kein kristallisierbares Material, fehlende Langzeitstabilität, zu niedriger Zinkgehalt etc.).

### Beispiel 2 - Demonstration der Wirkungsweise der erfindungsgemäßen Zinkverbindung in Modellkautschukmischungen gegenüber bekannten Zinkverbindungen mit anderen Stöchiometrien

Die Mischungsherstellung erfolgte unter üblichen Bedingungen in einer oder mehreren Mischstufen. Anschließend wurde diese weiterverarbeitet, z. B. durch einen Extrusionsvorgang, und per compression moulding in die entsprechende Form gebracht.

Die verschiedenen Komponenten der einzelnen Mischungen sind in den unten aufgeführten Tabellen angegeben.

**Tabelle 4: Formulierungsbestandteile der Kautschukzusammensetzungen für die Beispiele 2a) und b).**

| **Komponente** | **Chemische Klasse** | **Eigenschaften** |
|---|---|---|
| SVR 10 | Naturkautschuk (Vietnam) | |
| Ruß N-330 | Ruß | lodadsorptionszahl: 82±5 [g/kg] |
| TMQ | 2,2,4-Trimethyl-1,2-dihydrochi-nolin | Alterungsschutzmittel |
| ZnO Harzsiegel GR | Zinkoxid | Aktivator |
| Stearinsäure | Fettsäure | Aktivator |
| TBBS | N-tert-butyl-2-benzothiazyl-sul-fenamid | Beschleuniger |
| Schwefel | Schwefel, elementar oder Zubereitung | Vernetzungssystem |

Bei sämtlichen in der Tabelle enthaltenen Mischungsbeispielen sind die angegebenen Mengenangaben (Gewichtsteile) auf 100 Gewichtsteile Gesamtkautschuk bezogen (phr).

Aus sämtlichen Mischungen wurden Prüfkörper hergestellt und mit diesen Prüfkörpern für die Kautschukindustrie typische Materialeigenschaften mit den im Folgenden angegebenen Testverfahren ermittelt:
- Mooney-Messung (ML 1+4, 100 °C) und Mooney Scorch MS 135 °C (TS 5), nach jeder Mischstufe und nach Alterung, jeweils gemäß DIN EN ISO 289-1,
- MDR Messung nach DIN 53529-3
- Reißfestigkeit, Reißdehnung und Zugfestigkeit gemessen gemäß DIN 53 504, Parameter für Steifigkeit, auch für Reifenabrieb,
- Spannungswerte bei 100 und 300 % Dehnung bei Raumtemperatur (Modul 100 %, Modul 300 %), gemäß DIN 53 504,
- Compression set (Druckverformungsrest, DVR) bei RT, 70 °C und 100 °C und für 22 h, 72 h und 168 h nach DIN ISO 815 Teil 1, Typ B.
- Heat-Build-Up entsprechend der DIN 53533-3 bei 2 MPa statischer Belastung, Kammertemperatur von 50 °C und 6,35 mm Verformungsweg.
- Blow-Out-Test entsprechend der DIN 53533-3 bei 2 MPa statischer Belastung, Kammertemperatur von 100 °C und 6,35 mm Verformungsweg.

Die Vulkanisationseigenschaften wurden mit einem Vulkameter MDR 2000 gemessen.

### a) Reversionsstabilität, state-of-cure und Blow-out-Test in einer Kautschukmischung

In diesem Beispiel wurden die Eigenschaften einer Kautschukformulierung, die das erfindungsgemäße Additiv 1 enthält (Zusammensetzung 1.1), verglichen mit den Eigenschaften einer ansonsten identischen Kautschukformulierung, die ein dem technischen Stand entsprechendes Vergleichsadditiv Additiv 2 (Zink-2-ethylhexanoat, ZEH) enthält (Vergleichszusammensetzung 1.2). In Zusammensetzung 1.1 wurde das in 1 a) hergestellte Zinkverbindung A verwendet. Das Zink-2-ethylhexanoat welches als Vergleichsadditivverwendet wurde, liegt als 4:6 Komplex vor.

Der Vergleich zeigt verbesserte Reversionsstabilitäten der erfindungsgemäßen Kautschukzusammensetzung. Auch der Heat-Build-Up bzw. die Blow-out-Eigenschaften sind bei der des erfindungsgemäßen Kautschukzusammensetzung signifikant verbessert. Aufgrund der final höheren Vernetzung der Mischung (state-of-cure) sind alle physikalischen Eigenschaften erwartbar verändert.

**Tabelle 5: Übersicht über Formulierungen und Messdaten der Kautschukzusammensetzungen 1.1 und Vergleichszusammensetzung 1.2**

| **Zusammensetzung** | **Zusammensetzung 1.1** | **Vergleichszusammensetzung 1.2** |
|---|---|---|
| SVR 10 (Naturkautschuk) | 100 | 100 |
| Ruß N-330 | 50 | 50 |
| TMQ | 3 | 3 |
| ZnO | 3 | 3 |
| Stearinsäure | 1 | 1 |
| **Additiv 1** | **3** | |
| **Additiv 2** | | **3** |
| TBBS | 1,3 | 1,3 |
| Schwefel | 2 | 2 |
| | | |

| **Verarbeitbarkeit** | | |
|---|---|---|
| Mooney ML (1+4) 100 °C [MU] | 58 | 58 |
| Mooney scorch MS 135 °C (TS 5) | 12,4 | 12,9 |

| **Reversion - Rheometer MDR 2000 - 150 °C** | | |
|---|---|---|
| Torque ML [dNm] | 2,12 | 2,22 |
| Torque MH [dNm] | 17,85 | 17,73 |
| Torque MH-ML [dNm] | 15,73 | 15,51 |
| Reversion 3% [min] | **7,54** | 6,85 |
| Reversion 10% [min] | **15,00** | 12,22 |

| **Reversion - Rheometer MDR 2000 - 170 °C** | | |
|---|---|---|
| Torque ML [dNm] | 1,90 | 1,94 |
| Torque MH [dNm] | 16,53 | 16,42 |
| Torque MH-ML [dNm] | 14,63 | 14,48 |

| **Vulkanisateigenschaften** | | |
|---|---|---|
| Zugfestigkeit [MPa] | 26,1 | 28,1 |
| Reißdehnung [%] | 426 | 444 |
| Modul 100% [MPa] | 3,6 | 3,8 |
| Modul 300% [MPa] | 16,9 | 17,2 |
| DVR 22h / 70°C [%] | **19** | 22 |
| DVR 72h / 70 °C [%] | **27** | 30 |

| **Flexometerprüfung - HBU und Blow out** | | |
|---|---|---|
| Blow out Verformung [%] (Blow out) | **-21,1** | -37,4 |
| Blow out Zeit [hh:mm:ss] (Blow out) | **00:34:24** | 00:29:26 |
| Bleibende Verformung [%] (HBU) | **8,3** | 8,7 |
| | | |

Die Messdaten in Tabelle 5 zeigen, dass eine Verminderung der Reversion durch das erfindungsgemäße Additiv erhalten wurde. Die absolute Vernetzungshöhe ist zwar mit 15,73 dNm zu 15,51 dNm nicht deutlich höher, aber die Reversion wird signifikant abgeschwächt: erst nach 7,54 min sind 3% Reversion erreicht bzw. erst nach 15,00 min 10% gegenüber 6,85 min und 12,22 min bei der Vergleichszusammensetzung 1.2.

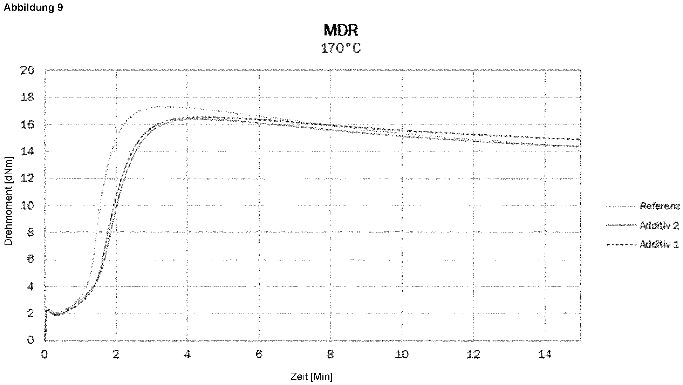

In Abbildung 9 ist dieser Sachverhalt zusätzlich graphisch dargestellt. Die gepunktete Linie stellt hierbei den Vulkanisationsverlauf einer Vergleichszusammensetzung ohne ein Additiv als Referenz dar. Gestrichelt ist die Kurven der erfindungsgemäßen Zusammensetzung 1.1 und durchgezogen ist die Linie mit dem bekannten Additiv 2 (ZEH) behandelte Zusammensetzung 1.2. Es ist ersichtlich, dass die Referenz wesentlich schneller vulkanisiert, dann aber nach ca. 3 bis 4 min schon in eine ausgeprägte Reversion aufweist. Die Kurve der erfindungsgemäßen Zusammensetzung 1.1 verläuft hingegen wesentlich flacher und fällt im Bereich der Reversion kaum ab; was auf eine Verbesserung im Vergleich zu der Vergleichszusammensetzung 1.2 schließen lässt.

Die Vulkanisat-Eigenschaften werden ebenfalls positiv durch die erfindungsgemäße Zinkverbindung beeinflusst. Bei einem final höheren state-of-cure kann davon ausgegangen werden, dass das entsprechende Material ein wenig steifer und weniger reißfest ist. Dementsprechend weist die erfindungsgemäße Zusammensetzung 1.2 leicht geringere Zugfestigkeiten, Reißfestigkeiten und Modul auf. Gleichzeitig steigt jedoch das Elastizitätsmodul im Vergleich zum Verlustmodul, was auf ausgeprägtere elastische Eigenschaften hinweist- abzulesen in der Verbesserung des Druckverformungsrestes. Hier bedeutet eine kleinere Zahl, dass weniger von einer statisch auferlegten Verformung am Prüfling zurückbleibt.

Auch bei der Flexometerprüfung, bzw. des Blow-Out-Testes wies die erfindungsgemäße Zusammensetzung 1.2 vorteilhafte Eigenschaften auf. Die Dauer, bis ein Prüfling tatsächlich einer fatalen Degradation unterliegt ist bei der Kautschukformulierung mit dem erfindungsgemä-βen Additiv 1 um knapp 5 min höher; das bedeutet, dass diese Zusammensetzung z.B. wesentlich länger einer dynamischen Belastung (etwa einer Dämpfungsbelastung) standhalten kann.

### b) Reversionsstabilität, state-of-cure und Blow-out-Test in einer Kautschukmischung

In diesem Beispiel wurden die Eigenschaften einer Kautschukzusammensetzung, die das erfindungsgemäße Additiv 1 enthält (Zusammensetzung 2.1), verglichen mit den Eigenschaften zweier ansonsten identischen Kautschukzusammensetzung, die jeweils ein dem technischen Stand entsprechendes Additiv 2 (ZEH) und Additiv 3 (Zink-Neodecanoat (Stöchiometrie 1:2), kommerziell erhältlich als Aktivator 50) enthalten (Vergleichszusammensetzung 2.2 und 2.3). Die Additive enthalten unterschiedliche stöchiometrische Mengen an Zink-lonen. Um die Vergleichbarkeit der Mischungen der vorliegenden Studie zu gewährleisten, wurde die Einsatzmenge der Additive angepasst um die Mengen an Zink-Ionen in der Zusammensetzung gleich zuhalten.

Auch dieser Vergleich zeigt verbesserte Reversionsstabilitäten des erfindungsgemäßen Additiv 1, sowie signifikant verbesserte Heat-Build-Up und Blow-out Eigenschaften im Flexometertest. Aufgrund der final höheren Vernetzung der Zusammensetzung 2.1 (state-of-cure) sind auch die physikalischen Eigenschaften der Zusammensetzung 2.1 verändert.

**Tabelle 6: Übersicht über Formulierungen und Messdaten der Kautschukzusammensetzungen 2.1, und Vergleichszusammensetzungen 2.2 und 2.3**

| **Zusammensetzung** | **Zusammensetzung 2.1** | **Vergleichszusammensetzung 2.2** | **Vergleichszusammensetzung 2.3** |
|---|---|---|---|
| SVR 10 (Naturkautschuk) | 100 | 100 | 100 |
| Ruß N-220 | 60 | 60 | 60 |
| N-375 (naphth. Oil) | 5 | 5 | 5 |
| **Additiv 1 [Zn-Geh.: 23% pro phr Additiv]** | **3,37** | | |
| **Additiv 2 [Zn-Geh.: 19,4% pro phr Additiv]** | | **4,00** | |
| **Additiv 3 [Zn-Geh.: 13,3% pro phr Additiv]** | | | **5,83** |
| TBTMQ | 1,5 | 1,5 | 1,5 |
| 6PPD | 1,7 | 1,7 | 1,7 |
| Stearinsäure | 2 | 2 | 2 |
| ZnO | 3,5 | 3,5 | 3,5 |
| Schwefel | 2,5 | 2,5 | 2,5 |
| TBBS | 1,5 | 1,5 | 1,5 |
| TBzTD | 0,3 | 0,3 | 0,3 |

| **Verarbeitbarkeit** | | | |
|---|---|---|---|
| Mooney ML (1+4) 100 °C [MU] | 69 | 63 | 66 |
| Mooney scorch MS 135 °C (TS 5) | 10,5 | 12,1 | 14,1 |

| **Reversion - Rheometer MDR 2000 - 160 °C** | | | |
|---|---|---|---|
| Torque ML [dNm] | 1,12 | 1,04 | 1,2 |
| Torque MH [dNm] | 24,03 | 22,36 | 21,39 |
| Torque MH-ML [dNm] | **22,91** | 21,32 | 20,19 |
| Reversion 3% [min] | **16,8** | 14,40 | 12,00 |
| Reversion 10% [min] | **59,99** | 47,99 | 31,19 |

| **Vulkanisateigenschaften (ohne Alterung)** | | | |
|---|---|---|---|
| Zugfestigkeit [MPa] | 25,3 | 24,2 | 25,2 |
| Reißdehnung [%] | 380 | 397 | 417 |
| Modul 100% [MPa] | **4,8** | 4,0 | 3,9 |
| Modul 300% [MPa] | **19,6** | 17,6 | 17,1 |
| DVR 24h / 70°C [%] | **21** | 21 | 23 |

| **Vulkanisateigenschaften (nach Alterung an der Luft, 1 Woche, 70 °C)** | | | |
|---|---|---|---|
| Zugfestigkeit [MPa] | 23,2 | 21,5 | 22,8 |
| Reißdehnung [%] | 287 | 295 | 316 |
| Modul 100% [MPa] | 6,7 | 5,5 | 5,5 |
| Modul 300% [MPa] | - | - | 21,8 |

| **Flexometerprüfung - HBU und Blow out (Vulkanisation auf TC100)** | | | |
|---|---|---|---|
| Blow out Verformung [%] (Blow out) | **-34,4** | -37,1 | -35,7 |
| Blow out Zeit [hh:mm:ss] (Blow out) | **00:28:28** | 00:25:17 | 00:19:03 |

| **Flexometerprüfung - HBU und Blow out (Vulkanisation auf 3x TC100)** | | | |
|---|---|---|---|
| Blow out Verformung [%] (Blow out) | **-32,8** | -34,5 | -36,2 |
| Blow out Zeit [hh:mm:ss] (Blow out) | **00:29:12** | 00:26:16 | 00:18:53 |

Aus den Messdaten in Tabelle 6 ergibt sich ein ähnliches Bild wie aus den in Beispiel 2a) angeführten Messungen. Das erfindungsgemäße Additiv 1 zeigte erst nach ca. 17 min eine Reversion von 3% und nach 1 h eine Reversion von 10%, während die beiden Vergleichszusammensetzungen 2.2. und 2.3 bereits nach 14,4 und 12 min eine 3% Reversion aufwiesen und sich eine Reversion von 10% bei 48 min respektive 31 min einstellte. Additiv 3 ist damit lediglich halb so wirksam bzgl. der Reversion wie das erfindungsgemäße Additiv 1.

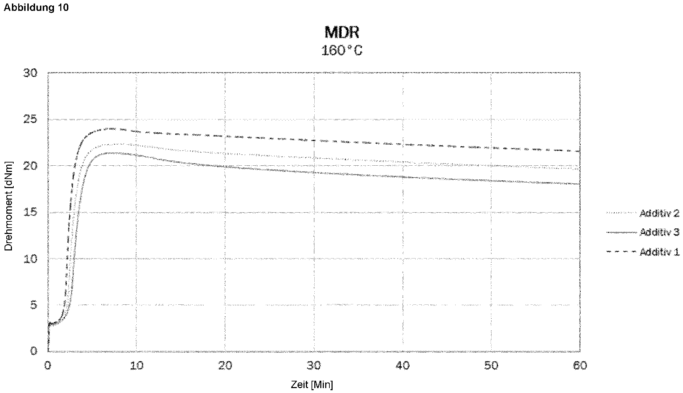

In Abbildung 10 sind die Vulkanisationskurven (gemessen mit einem Vulkameter MDR 2000) aller drei Mischungen abgebildet. Alle drei vermessenen Zusammensetzungen (Zusammensetzungen 2.1 bis 2.3) zeigen zunächst einen Sprung zu Reversionsstart, aber die Steigung der erfindungsgemäßen Zusammensetzung mit Additiv 1 (gestrichelte Linie) ist wesentlich weniger ausgeprägt als die der beiden Vergleichszusammensetzungen 2.2. und 2.3.

In diesem Fall ist auch ein wesentlich stärkerer Unterschied in der Höhe der absoluten Maxima zu erkennen. Dieser Wert minus dem Minimumwert bei ca. 1 min ergibt die relative Maximalvernetzung, welche bei der erfindungsgemäßen Zusammensetzung 2.1 am höchsten ausfällt. Dieses zeigt, dass die erfindungsgemäße Zusammensetzung 2.1 den höchsten state-of-cure aufweist bzw. am stärksten vernetzt ist.

Die Vulkanisat-Eigenschaften sind auch in diesem Beispiel leicht unterschiedlich: Es wurden vergleichbare Werte gefunden bei Zusammensetzung 2.1 und Vergleichszusammensetzung 2.3 gefunden. Allerdings zeigt Vergleichszusammensetzung 2.2 eine niedrigere Zugfestigkeit. Der Druckverformungsrest konnte bei der erfindungsgemäße Zusammensetzung 2.1 durch den vergleichbar höheren Anteil des Elastizitätsmoduls gesenkt werden.

Bei dieser Studie wurden zusätzlich zu den frischen Vulkanisat-Werten noch Werte nach einer einwöchigen Alterung aufgenommen. Diese simulieren eine ausgeprägtere, langanhaltende thermische Belastung, bei welcher ebenfalls Reversionsvorgänge ablaufen. Für die erfindungsgemäße Zusammensetzung 2.1 wurde nach Alterung ein minimal höherer Wert der Zugfestigkeit gemessen, während alle Reißfestigkeiten vergleichbar niedriger ausfallen. Zusätzlich fallen die höheren M100- und M300-Werte der erfindungsgemäßen Zusammensetzung 2.1 ins Auge, welche typisch für einen höheren state-of-cure sind und damit hervorragend mit den Vulkanisationskurven übereinstimmen. Die thermische Degradation fällt bei der erfindungsgemäßen Zusammensetzung 2.1 am geringsten aus, was die verbesserte Stabilität unterstreicht.

Die Flexometerprüfung wurde zweimal durchgeführt mit jeweils unterschiedlich präparierten Prüflingen: einmal vernetzt bis "tc100", was einer Vulkanisation bis zum Maximum der Vernetzung aus der MDR-Messung entspricht und einmal bis "3x tc100" was dem Dreifachen dieser Zeit entspricht. Auch hierdurch wird eine Probe überdurchschnittlich starker thermischer Belastung ausgesetzt und ein verstärkter Reversionsprozess wird beobachtet.

Sowohl mit Vernetzung tc100 als auch 3xtc100 ist die erfindungsgemäße Zusammensetzung 2.1 am besten fähig durch Energiedissipation induzierter Wärme und der damit verbundenen Degradation zu widerstehen. Die Blow-out-Zeit der erfindungsgemäßen Zusammensetzung 2.1 hält der Belastung im Vergleich mit Vergleichszusammensetzung 2.2 bei beiden Prüfungen ca. 3 min länger stand und im Vergleich mit Vergleichszusammensetzung 2.3 sogar 8,5 min und 9 min, was eine signifikante Verbesserung um knapp 50% respektive 53% bedeutet.

Insgesamt lässt sich festhalten, dass durch den Einsatz des erfindungsgemäßen Additivs 1 eine bessere Vernetzung und bessere physikalische Eigenschaften erhalten werden konnten. Da die verwendete Einsatzmenge an Zinkverbindung auf die stöchiometrische Menge an Zink-Ionen abgestimmt ist, bedeutet dies, dass bei Verwendung der erfindungsgemäßen Zinkverbindung die Zink-Ionen wesentlich besser für das Vulkanisationssystem (Schwefel, Beschleuniger, Aktivator) verfügbar sind. Daraus folgt also ein weiterer Vorteil der Verwendung der erfindungsgemäßen Zinkverbindung: geringerer Bedarf an Zinkverbindung bei trotzdem besserer Wirksamkeit.

## Patentansprüche

1. Kautschukzusammensetzung, die umfasst:
a) eine größere Menge Kautschuk, und
b) eine kleinere Menge Zinkverbindung, hergestellt aus mindestens einer verzweigten, aliphatischen C₅- bis C₃₀-Carbonsäure und mindestens einer Zinkquelle, wobei das Molverhältnis von Carbonsäure zu Zink in der Zinkverbindung 0,7 : 1 bis 1 : 0,7 beträgt.

2. Kautschukzusammensetzung nach Anspruch 1, wobei die mindestens eine Carbonsäure eine gesättigte C₆- bis C₂₀-Carbonsäure, vorzugsweise eine gesättigte C₇- bis C₁₂-Carbonsäure, wie gesättigte C₈- bis C₁₀-Carbonsäure und insbesondere Isononansäure ist; und/oder die Zinkquelle ausgewählt ist aus Zinkhydroxid, Zinkoxid, Zinkchlorid, Zinknitrat, oder Mischungen davon.

3. Kautschukadditiv nach einem der vorherigen Ansprüche, wobei die Zinkverbindung einen Zinkkationengehalt von 20 bis 33 Gew.-% Zn²⁺, vorzugsweise 20 bis 30 Gew.-% und insbesondere 23 bis 28 Gew.-% aufweist, wie gemäß DIN 55908 (Teil 2) bestimmt bzw. berechnet.

4. Kautschukzusammensetzung nach einem der vorherigen Ansprüche, wobei das Molverhältnis von Carbonsäure zu Zink in der Zinkverbindung 0,8 zu 1 bis 1 zu 0,8 beträgt, vorzugsweise 1 zu 1.

5. Kautschukzusammensetzung nach einem der vorherigen Ansprüche, wobei die Zinkverbindung mindestens eine, vorzugsweise mindestens 2, oder alle der folgenden Eigenschaften aufweist:
• Tropfpunkt von 110 bis 120°C, insbesondere 110 bis 115°C, wie gemäß DIN ISO 2176/97 gemessen;
• Erweichungspunkte von 90 bis 115°C, insbesondere 100 bis 110°C, wie gemäß DIN 51920 gemessen;
• Thermogramm, gemessen mittels Dynamischer Differenzkalorimetrie (Differential Scanning Calorimetry, DSC) gemäß DIN 51007, welches einen endothermen Peak im Temperaturbereich von 60 bis 120°C, wie 60 bis 110°C und insbesondere eine Peakspitze im Temperaturbereich von 101 bis 105°C aufweist und keinen weiteren Peak im Temperaturbereich von 30 bis 60°C aufweist.

6. Kautschukzusammensetzung nach einem der vorherigen Ansprüche, wobei die Zinkverbindung in fester Form in die Kautschukzusammensetzung eingebracht wird, vorzugsweise in Form von einer oder mehrere Pastillen, welche Pastille(n) vorzugweise kein Trägermaterial umfasst/umfassen.

7. Kautschukzusammensetzung nach einem nach einem der vorherigen Ansprüche, wobei die Zinkverbindung in einer Konzentration von 0,5 bis 10 phr, vorzugsweise 1 bis 7 phr, insbesondere 2 bis 5 phr in der Kautschukzusammensetzung vorliegt, bezogen auf das Gesamtgewicht der Kautschukzusammensetzung.

8. Kautschukzusammensetzung nach einem der vorherigen Ansprüche, wobei der Kautschuk mindestens einen Dien-Kautschuk umfasst, vorzugsweise aus einem oder mehreren Dien-Kautschuk(en) besteht.

9. Kautschukzusammensetzung nach Anspruch 8, wobei der oder die Dien-Kautschuk(e) ausgewählt ist/sind aus Butadien-Kautschuk, Polyisopren, Styrol-Butadien-Kautschuk, Naturkautschuk, Acrylnitril-Butadien-Kautschuk, Ethylen-Propylen-Dien-Kautschuk, Fluorkautschuk und thermoplastisches Elastomer, vorzugsweise Naturkautschuk.

10. Kautschukzusammensetzung nach einem der vorherigen Ansprüche, welche ferner einen oder mehrere der folgenden Kautschuk-Komponenten ausgewählt aus der Gruppe von Füllstoffen, Aktivatoren für eine Vernetzung mit Schwefel, Katalysatoren oder Aktivatoren für eine peroxidische oder aminische Vernetzung, Alterungsschutzmittel, Wachse, Harze, Mastikationshilfsmittel, Weichmacher, Beschleuniger, Verzögerer und/oder Verarbeitungshilfsmittel umfasst.

11. Gummiartikel, bei dem wenigstens ein Bauteil zumindest teilweise aus einer Kautschukzusammensetzung gemäß einem der Ansprüche 1 bis 10 hergestellt wurde, wobei der Gummiartikel vorzugsweise ein Reifen ist.

12. Verwendung einer Zinkverbindung wie in einem der Ansprüche 1 bis 7 definiert als Verarbeitungshilfe in Dien-Kautschuk(en), wobei der oder die Dien-Kautschuk(e) ausgewählt ist/sind aus Butadien-Kautschuk, Polyisopren, Styrol-Butadien-Kautschuk, Naturkautschuk, Acrylnitril-Butadien-Kautschuk, Ethylen-Propylen-Dien-Kautschuk, Fluorkautschuk und thermoplastisches Elastomer, vorzugsweise Naturkautschuk.

13. Verwendung nach Anspruch 12, wobei eine oder beide der folgenden Eigenschaften um mindestens 5 %, vorzugsweise mindestens 10 % verbessert wird gegenüber einer ansonsten gleichen Kautschukzusammensetzung, die eine Zinkverbindung, hergestellt aus mindestens einer verzweigten, aliphatischen C₅- bis C₃₀-Carbonsäure und mindestens einer Zinkquelle, enthält, welche Zinkverbindung ein Molverhältnis von Carbonsäure zu Zink außerhalb des Bereichs von 0,7 zu 1 bis 1 zu 0,7 aufweist:
• Reversionsstabilität, gemessen als die Zeit, die für eine 3% Reversion benötigt wird gemäß DIN 53529,
• Blow-Out-Testung und/oder Heat-Build-Up, gemessen gemäß DIN 53533-3 bei 2 MPa statischer Belastung, Kammertemperatur von 50 °C und 6,35 mm Verformungsweg.

14. Verwendung der Zinkverbindung wie in einem der Ansprüche 1 bis 7 definiert zur Erhöhung der Reversionsstabilität von Kautschukzusammensetzungen.

15. Verfahren zur Herstellung einer Zinkverbindung wie in einem der Ansprüche 1 bis 7 definiert, bei welchem Verfahren:
i) mindestens eine verzweigte, aliphatische C₅- bis C₃₀-Carbonsäure und mindestens eine Zinkquelle ausgewählt aus Zinkhydroxid, Zinkoxid, Zinkchlorid, Zinknitrat, oder Mischungen davon, vorzugsweise Zinkoxid, vermischt werden,
ii) das in i) hergestellte Gemisch bei einem Druck von 1 bis 3 atm auf Temperaturen von 25 bis 250°C, vorzugsweise 80 bis 180°C und insbesondere 100 bis 150°C erhitzt wird, um Zinksalz mit einem Molverhältnis von Carbonsäure zu Zink von 0,7 zu: 1 bis 1 zu 0,7 zu erhalten, und
iii) gegebenenfalls die in ii) erhaltene Zinkverbindung in die Form von einer oder mehrere Pastillen gebracht wird.
